(19) Europäisches Patentamt
European Patent Office
Office européen des brevets

(11) **EP 1 879 402 A1**

(12) **EUROPEAN PATENT APPLICATION**

(43) Date of publication:
**16.01.2008 Bulletin 2008/03**

(51) Int Cl.:
*H04Q 3/00* (2006.01)   *H04Q 7/22* (2006.01)

(21) Application number: **06014497.9**

(22) Date of filing: **12.07.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **Nokia Siemens Networks GmbH & Co.
KG
81541 München (DE)**

(72) Inventor: **Blommaert, Marc
9140 Temse (BE)**

(54) **Messaging service messages (sms) screening**

(57)     Optimizing message screening of protected messages by third parties in a telecommunications network for protocols that use two shared secret keys i.e. one for confidentiality protection and one for integrity protection, and trust relation allow the confidentiality key to be shared with the third party.

## FIG 2

EP 1 879 402 A1

**Description**

Field Of The Invention

The invention relates to a solution for optimizing message screening of protected messages by third parties.

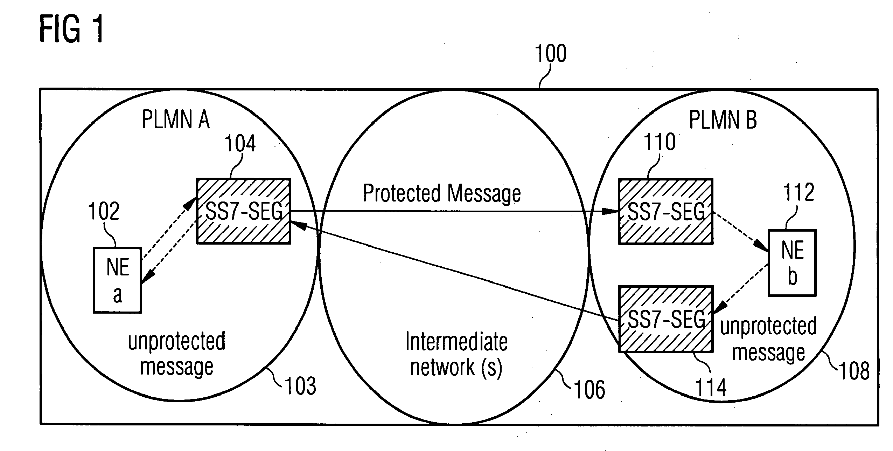

Figure 1 describes the SS7 Security Gateway Architecture 100 of TS 33.204. A SS7 Security Gateway is a Network Node that terminates and initiates TCAPsec. Similar to a SEG (see TS 33.210), the SS7 security Gateway is used for communication between two security domains i.e. two different SS7 networks (this may be two PLMN's, or one PLMN and an SS7-carrier or two sub domains within a PLMN, ...).But typically SS7SEGs are placed at the border of the PLMNs.

A first Network Entity a (NEa) 102 of a first PLMN A 103 sends and receives unprotected messages to an SS7 security gateway (SEG) 104. The SS7-SEG protects the message, which is forwarded by an intermediate network 106, for example. The protected message is received by a second PLMN B 108 at the other end and deprotected/validated by another SS7-SEG 110 and sent to a second Network Entity (NEb) 112. Similarly, messages from NEb are protected by a second SS7-SEG 114 at the PLMN B side. There may be one or more intermediate SS7 networks between the sending and the receiving SS7-SEGs.

When applying encryption on TCAP user payloads between a network operator A and a network operator B it becomes impossible for a third party C to re-construct the unencrypted payload from the traced encrypted message. This third Party C i.e. an SS7-carrier (e.g. SS7 network usually owned by a fixed operator that is located on the path between the sending operator A and receiving operator B - called Intermediate network in Figure 1) often not only offers the service of SS7 data transport but also offers some SS7-message screening services (and may also charge upon the amount of transported messages). These message screening services are mostly, but not always, related to SMS content that is transported (i.e. not all TCAP-messages are screened for unwanted content or wrong payload address fields) and aim e.g. to block SMS SPAM.

With the introduction of the TCAPsec architecture, the SS7-message screening services will have to be moved towards network domain A and/or B, so outside of the SS7-carriers responsibility, unless operator A or B trust the SS7-carrier and hand over the TCAPsec encryption/decryption keys, but not the TCAPsec integrity keys. TCAPsec uses shared secret keys such that the encryption key equals the decryption key. TCAPsec uses different keys for confidentiality and integrity.

The problem to be solved is to minimise the cryptographic handling (due to the confidentiality protection) when message screening needs to be performed at the intermediate SS7-carriers. In addition, the solution should not cause too much key management overhead at the SS7SEG's of the communicating PLMN's (i.e. the end points of the encryption).

Summary & Objects Of The Invention

In order to realize this, the solution adds screening indicators to the TCAPsec message in order to have a flexible solution for third party message screening (of confidentiality protected messages) such that the amount of security associations (i.e. Key Management) can be kept to a minimum.

In another variation, the solution allows a third party to signal that screening was performed without adding extra bits to the message.

This solution may also be of use for non-confidentiality (but integrity) protected messages too. For example, in the presence of a message authentication Code (MAC), message integrity can be verified before message content evaluation.

Although, the present solution is described in terms of TCAPsec it may also be applied to other protocols than TCAPsec in similar network configuration(s).

Detailed Description

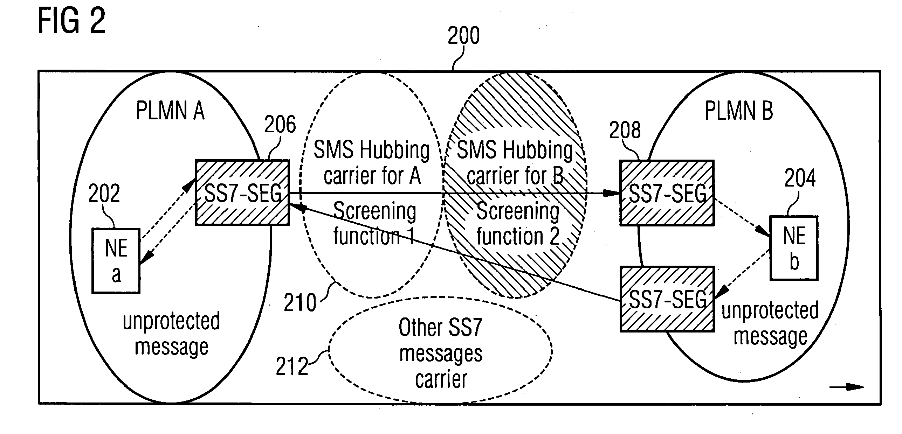

Figure 2 illustrates a possible architecture 200 where the proposal could be applied into.

As in figure 1, a first NEa 202 transmits a message to a second NEb 204 that is first protected by an SS7-SEG 206 and un-encrypted at the other end by an SS7-SEG 208.

In the architecture here, SMS related messages are sent towards one intermediate carrier 210. This intermediate carrier 210 provides a screening function on SMS messages. Non SMS-related messages may be forwarded via another SS7 carrier.The solution might be applied in other architectural alternatives and so will be equally applicable there.

The screening function for screening MAP transporting e.g. SMS messages could be, for example, a SPAM filtering or Firewalling function. The Firewalling function could consist in blocking certain MAP messages with particular SCCP address pairs. The SPAM filtering function requires that the intermediate screener inspects e.g. the SMS content from the MAP payload.

This screening solution needs to be carried out by delivering the intermediate carrier the decryption keys otherwise the screening has to be moved to the edges of the network e.g. within PLMN A or PLNM B. When PLMN A has performed confidentiality protection on all MAP messages then the intermediate carrier needs to dip into each protected message (to deprotect the message) and then, based on the type of payload, performs further inspection. This is due to the fact that TCAPsec applies a security tunnel i.e. the type of user (e.g. MAP SMS message) payload is not visible outside the encrypted part of the message. This is very similar to IPsec tunneling where original IP Payload and IP header are not visible outside of the tunnel.

Having to deprotect each TCAPsec message needs to be performed because (by design to limit the number of extra bytes) the TCAPsec security header does not carry an indication of the exact transport content type (in IETF speak the Next Header). This causes a lot of processing overhead to the intermediate carriers when the amount of to-be-screened confidentiality-protected messages is small compared to the amount of transported confidentiality-protected messages.

As mentioned, transporting the exact upper layer payload type in cleartext of the security header of TCAPsec, could have been a solution, but this caused too much overhead for SS7 and so was rejected when designing TCAPsec.

Another solution to reduce the performance requirements for decryption on the SS7 carrier is to use several Security Associations (SA) i.e. logical connections created for security purposes. All traffic traversing a security association is provided the same security protection. The security association specifies protection levels, algorithms to be used, lifetimes of the connection etc.

For example, at least two SA's could be provided: one for messages that shall be screened and one for messages that shall not be screened. Each Security Association is identified by an SPI (Security Parameter Index) and this SPI is carried within the TCAPsec security header.

Cfr. TS 33.204 Section 5.5.1 (the text between the two lines is a quote).

We now turn to an analysis of the security header and how each is used in the present solution. For Protection Mode 2, the one that is relevant to our example, the security header is a sequence of the following elements:

```
Security header  =  SPI || TVP || SS7-SEG Id || Prop
```

The Security Parameters Index (SPI) is a known parameter and need not be discussed for purposes of this invention.

The TVP, used for replay protection of secured TCAP user message, is a 32 bit time-stamp. The receiving network entity will accept an operation only if the time-stamp is within a certain time-window. The resolution of the clock from which the time-stamp is derived is 0.1 seconds. The size of the time-window at the receiving network entity is not standardised.

SS7-SEG Id is 1 octet and is used to create different IV values for different SS7-SEGs within the same TVP period. An SS7-SEG Id normally should be unique per PLMN. (This is sufficient because sending keys are unique per PLMN.) The SS7-SEG Id shall be a unique number within the PLMN.

Proprietary field (PROP) is also 1 octet and is used to create different IV values for different protected TCAP user messages within the same TVP period for one network entity. The usage of the proprietary field is not standardised.

In that way the SPI uniquely identifies that the message shall be screened. The disadvantage is, however, is that key management data (the number of SA's) is increased. Also this concept has no inherent flexibility i.e. A message cannot be moved from SA-1 to SA-2 (e.g. because screening of this message is now needed), without informing the destination PLMN as this PLMN might check used SPI against certain transported TCAP user payload type.

The idea is to add information (we call this information a screening indicator) within the security header of the message to give indication about whether the message shall be screened by the intermediate SS7 carrier. This screening indicator can be added to TCAPsec anywhere outside of the confidentiality protected payload i.e. within the Header.

In the case of TCAPsec, TCAPsec automatically applies integrity protection to that information because the complete TCAPsec security header is integrity protected. If the TCAP message is not confidentiality protected then the SS7 carrier can apply the screening on the basis of the plaintext TCAP payload but this is less efficient than to use the screening indicator.

An advantage of the above screening indicator solution is that a change in the set of screened messages will not affect the amount of security associations. That is, the sending PLMN will not need to reassociate certain messages to certain SPI to perform particular screening. However, the sending PLMN SS7SEG will be able to use one SA and dynamically signal (eventually upon out-of-band agreement with the receiving PLMN) which protected TCAP messages need to be screened.

It may be possible that an attacker could change the screening indicators before and after the message screening takes place. However, this is considered quite difficult because the unauthorized access must be done at two different links at the same time at the screening SS7 carrier. Although the Intermediate nodes will not detect any inconsistencies (the SS7 carrier does not have the integrity key), bit modifications within the message will be detected by MAC verification in the receiving SS7SEG. Hence, the likelihood of an intrusion going undetected is made unlikely.

In case that the invention is implemented in TCAPsec, the screening indicator may be realized with a few spare bits of the security header.

In one variation of the solution, a screening indicator could also be used to give an indication for the intermediate SS7 carrier that the message screening has already been performed. For example, if the originating SS7SEG has implemented own message screening functions for instance on part of the messages. An additional indicator (such as a bit) in the message header may then be an indication for the intermediate SS7-carrier to skip message screening.

In another variation, a screening indicator could also be set by an Intermediate SS7 carrier. This should be an additional bit in the message header as this needs not be confused with screening already performed by Sending PLMN). However bit modifications in the TCAPsec message header by intermediates result in MAC failures at the verifying endpoint. On the other hand, the intended functionality can be obtained by allocating an additional independent cipher key to the SS7-carrier that performs the screening. In addition to the Message header modification (setting the bit) the SS7 carrier substitutes the MAC by an IMAC (Intermediate carrier MAC). With regard to the example of Figure 2, it should be borne in mind that the incoming or outgoing SS7-carrier has substituted the MAC with IMAC. That means that two bits are utilized if the solution wants to distinguish two different screeners on the intermediate path. The exact key of the SS7 carrier at the receiving PLMN may be identified via the SPI. The process at the receiving PLMN is then to check first if the screening indicator is set, if set then to identify the right SS7 carrier key, and then to decrypt the IMAC i.e. the receiving PLMN verifies the MAC of the original TCAPsec message after decryption by the SS7 carrier key. For this a suitable MAC encryption/decryption function needs to be defined that preserves the MAC message length (this IMAC replaces the original MAC). A stream cipher could be used (modify 32-bit MAC bit by bit). This last variation requires additional key handling at the SS7 carriers and the receiving PLMNs. An alternative is to use a kind of bitmap on the MAC that is only shared between carrier and receiving PLMN. This fix would not have the cryptographic disadvantage but is less secure and less flexible.

In the description, certain acronyms that are standard and accepted in the industry may be utilized. For clarity, these well known acronyms and their meanings are provided below.

## Claims

1. A method for optimizing message screening of protected messages by third parties in a telecommunications network, comprising the steps of:

   sending messages towards an intermediate carrier (210),
   screening by the intermediate carrier of a particular set of received messages,
   the intermediate carrier forwarding the validated message towards the destination.

2. The method of claim 1, wherein the screening step screens MAP versus SMS messages.

3. The method of any of the preceding claims, wherein the screening step is SPAM filtering that cause an intermediate screener to inspect SMS content from an MAP payload.

4. The method according to any of the preceding claims, further comprising the step of employing a screening indicator that provides an indication for the intermediate SS7 carrier that the message screening has already been performed.

# FIG 1

**FIG 2**

200

PLMN A
202 — NE a
unprotected message
206 — SS7-SEG

SMS Hubbing carrier for A
Screening function 1
210

Other SS7 messages carrier
212

SMS Hubbing carrier for B
Screening function 2

PLMN B
208 — SS7-SEG
204 — NE b
SS7-SEG
unprotected message

**European Patent Office**

**EUROPEAN SEARCH REPORT**

Application Number

EP 06 01 4497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/67781 A (TEKELEC; MCCANN, THOMAS, MATTHEW) 13 September 2001 (2001-09-13) * page 1, line 19 - page 3, line 10 * * claim 1 * ----- | 1-4 | INV. H04Q3/00 H04Q7/22 |
| X | WO 2006/002076 A (TEKELEC; BALDWIN, PATRICIA, A; MARSICO, PETER, J) 5 January 2006 (2006-01-05) * page 3, line 27 - page 6, line 10 * * page 2, line 9 - line 30 * ----- | 1-4 | |

TECHNICAL FIELDS
SEARCHED (IPC)

H04Q

The present search report has been drawn up for all claims

| Place of search | Date of completion of the search | Examiner |
|---|---|---|
| The Hague | 16 August 2006 | Chassatte, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 4497

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2006

| Patent document cited in search report | | Publication date | Patent family member(s) | | Publication date |
|---|---|---|---|---|---|
| WO 0167781 | A | 13-09-2001 | AU | 4349401 A | 17-09-2001 |
| | | | EP | 1266528 A2 | 18-12-2002 |
| WO 2006002076 | A | 05-01-2006 | NONE | | |

EPO FORM P0459

For more details about this annex : see Official Journal of the European Patent Office, No. 12/82